Europäisches Patentamt

(19) European Patent Office

Office européen des brevets

(11) Numéro de publication: **0 050 094**

**A1**

# (12) DEMANDE DE BREVET EUROPEEN

(21) Numéro de dépôt: **81810376.4**

(22) Date de dépôt: **11.09.81**

(51) Int. Cl.³: **A 01 J 5/04**

---

(30) Priorité: **12.09.80 CH 6857/80**
**30.01.81 IT 6712381**

(43) Date de publication de la demande:
**21.04.82 Bulletin 82/16**

(84) Etats contractants désignés:
**BE DE FR GB SE**

(71) Demandeur: **Blanc, Didier**

**CH-1426 Corcelles-Concise(CH)**

(71) Demandeur: **Blanc, François**

**CH-1426 Corcelles-Concise(CH)**

(72) Inventeur: **Blanc, Didier**

**CH-1426 Corcelles-Concise(CH)**

(72) Inventeur: **Blanc, François**

**CH-1426 Corcelles-Concise(CH)**

---

(54) Faisceau de traite mécanique.

㊄ Faisceau destiné à limiter les irritations dues à la traite mécanique et à éviter la détérioration du lait produit.

Il est composé de quatre gobelets (1) reliés à un collecteur (2) destiné à être raccordé à un circuit d'évacuation du lait par un conduit de sortie (10) et à un circuit pulsateur par un conduit d'entrée (11).

Le circuit du lait comporte un organe obturateur (17) commandé par le circuit pulsateur, un évent (12) disposé entre ledit obturateur et l'orifice supérieur des gobelets (1), et un évent supplémentaire (18), disposé entre le même obturateur et le conteneur du circuit d'évacuation du lait.

De la sorte, à chaque phase d'obturation, alors que le vide est diminué dans les gobelets, permettant aux trayons de se détendre, il demeure stable dans le conduit d'évacuation, garantissant un écoulement idéal du lait, ce qui est avantageux pour la santé autant du pis que du lait.

./...

Croydon Printing Company Ltd.

## Faisceau de traite mécanique.

La présente invention a pour objet une amélioration importante des faisceaux de traite mécanique fonctionnant selon un principe de fluctuations dirigées du vide exercé sur les trayons, tels qu'ils sont briévement décrit dans le préambule de la revendication 1.

Dans ce type de faisceau de traite connu, un dispositif d'obturation de l'aspiration du lait, commandé par le circuit pulsateur, permet une diminution du vide exercé sur les trayons lors de chaque phase de relâchement du circuit pulsateur, soustrayant ainsi le trayon aux effets défavorables bien connus résultant de la combinaison de cette force d'aspiration à celle d'écrasement exercée par le collapsus du manchon du gobelet trayeur. Ce principe de fonctionnement permet d'éviter pour une large part les indurations et irritations des trayons dues à la traite mécanique, et de diminuer ainsi les risques d'infection du pis.

L'invention est basée sur l'observation des perturbations de l'écoulement du lait engendrées par l'obturation temporaire et périodique du circuit du lait. En effet, des enregistrements de pression effectués dans les conduits d'écoulement des faisceaux de traite connus de ce type le montrent clairement, à chaque obturation, le lait contenu dans le conduit d'écoulement ne peut plus être évacué et son inertie entraîne un flux inverse, qui provoque une importante et brusque diminution ( de l'ordre de 20 à 30 cm Hg pour un vide nominal de 36 cm Hg ) du vide effectif mesuré. De même, au moment de l'ouverture de l'obturateur, cette inertie, pour être compensée, nécessite une augmentation sensible ( 3 à 4 cm Hg ) du vide interne nominal dans les conduits du lait. Cette dépression ajoutée au vide interne nominal produit par la pompe est, l'obturateur étant alors ouvert, transmise à l'enceinte interne des gobelets,

- 3 -

donc aux trayons, dont on connait l'extrême sensibilité à
toute éxagération du vide. On a donc là une indéniable tare
d'un système qui cherche à éviter toute irritation desdits
trayons.

D'autre part, les brusques variations du niveau de vide
décrites ci-dessus provoquent un brassage accru du lait dans
les conduites, ce qui résulte en une augmentation de la teneur
du lait en acides gras libres, soit à une tendance accrue à la
rancidité, c'est à dire à un grave défaut organoleptique et
une moins bonne conservation.

Enfin, le moins bon écoulement du lait dans les conduits
d'évacuation provoque une diminution du débit de production
de la vache, donc un rallongement inutile et évitable du
temps de traite, et par là-même, beaucoup plus qu'une perte
de temps pour l'utilisateur, un danger accru ( irritation
mécanique des trayons plus longue, moins bonne finition de
la traite ) pour la santé du pis.

Le problème est donc d'importance.

La solution proposée, définie dans la caractéristique
de la revendication 1, supprime ces divers dangers et inconvénients en permettant une évacuation continue du lait dans
les conduits d'écoulement, tout en conservant les effets
bénéfiques de l'obturateur au niveau des trayons.

D'autres particularités et avantages de l'invention
ressortiront de la description qui suit.

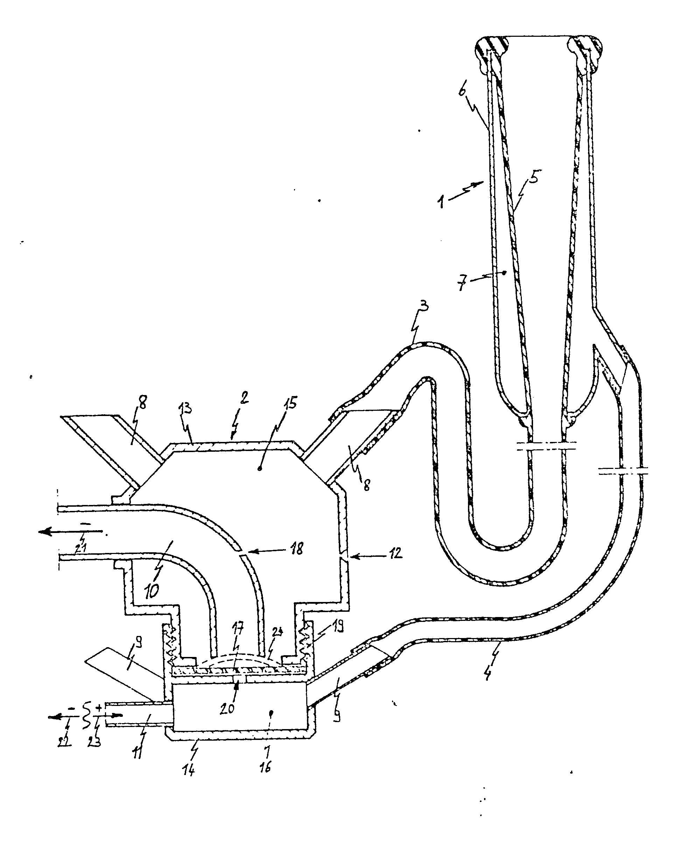

Le dessin annexé représent, à titre d'exemple, une
forme d'éxécution particulièrement  avantageuse de l'invention,
définie dans le caractéristique de la revendication 2.

L'unique figure de ce dessin en est une coupe sagittale.

- 4 -

Le faisceau de traite représenté, destiné à la traite des vaches, se compose de quatre gobelets identiques 1, dont un seul est reproduit, reliés chacun à un même collecteur 2 par deux conduites souples, l'une, 3, correspondant au circuit du lait, l'autre, 4, au circuit pulsateur.

Les gobelets représentés, constitués par l'assemblage d'un manchon trayeur élastique 5 à l'intérieur d'une enceinte rigide 6, ménageant autour de ce manchon une chambre de pulsation 7, sont du type de ceux utilisés sur des faisceaux de traite usuels.

Le collecteur à obturateur à membrane représenté est également de type déjà connu. Il comporte quatre conduits d'entrée 8, dont deux sont représentés ici, raccordés par les conduites souples 3 à l'intérieur des manchons trayeurs, quatre conduits de distribution du circuit pulsateur 9, dont deux sont montrés, raccordés par les conduites souples 4 à la chambre de pulsation 7 des gobelets, un conduit de sortie 10 destiné à être relié à un circuit d'évacuation du lait, un cinquième conduit d'entrée 11 destiné à être relié au circuit pulsateur, et un évent 12.

Le circuit d'évacuation du lait et le circuit pulsateur dont il est question, non représentés mais connus, sont du type de ceux qui équipent habituellement les installations de traite mécanique. Le circuit d'évacuation du lait évacue ce dernier dans un conteneur par l'effet d'une succion continue exercée par une pompe à vide branchée sur ledit circuit. Le circuit pulsateur a pour fonction de produire et de régler la périodicité des phases alternées de succion et de relâchement des trayons, en association avec le circuit du lait. A cet effet, le circuit pulsateur est soumis périodiquement à des pressions différentes par un générateur

- 5 -

de pulsations auquel il est relié.

Le corps du collecteur 2 est conçu en deux parties amovibles 13 et 14, assemblées par un pas de vis 19 et formant deux chambres 15 et 16, séparées par une membrane élastique 17, qui constitue l'organe obturateur.

La partie supérieure 13, formant la chambre supérieure 15 qui correspond au circuit du lait, comporte les quatre conduits de raccordement aux manchons trayeurs 8, l'évent 12 dont dépend la diminution du vide exercé sur les trayons lors de la phase d'obturation, et le conduit d'évacuation du lait 10 sur lequel est percé l'évent supplémentaire 18. Ce conduit de sortie débouche par un coude au centre de la membrane élastique, 17, tangentiellement à la surface de celle-ci.

La partie inférieure 14, formant la chambre inférieure 16 qui correspond au circuit pulsateur, comporte le conduit d'entrée 11 destiné à être raccordé au dit circuit, les quatre conduits de distribution du vide 9, et la communication 20 avec la face inférieure de la membrane élastique 17.

Le faisceau de traite ainsi réalisé fonctionne de la manière suivante:

Une fois le collecteur 2 raccordé au circuit d'évacuation du lait et au circuit pulsateur, et les quatre gobelets 1 engagés sur les trayons de la vache à traire, et une fois ces circuits mis en fonctionnement, de manière habituelle, la membrane 17 se trouve sollicitée à la fois par le vide permanent régnant dans le conduit 10 raccordé au circuit d'évacuation du lait, signifié par la flèche 21, et par les fluctuations du vide régnant dans la chambre inférieure 16 raccordée au circuit pulsateur.

A la phase de basse pression du circuit pulsateur,

- 6 -

signifiée par la flèche 22, la membrane 17, soumise sur ses deux faces à un vide identique, prend une position horizontale d'équilibre, et libère l'embouchure du conduit 10. Il en résulte que la chambre supérieure est mise en dépression par le circuit d'évacuation du lait et que les trayons engagés dans les gobelets subissent une succion consécutive à cette dépression. Simultanément, la basse pression du circuit pulsateur entraîne l'ouverture des manchons trayeurs, permettant ainsi l'écoulement du lait en réponse à la succion réapparue. Lors de cette phase, l'écoulement du lait n'étant nulle part interrompu, les fonctions de l'évent supplémentaire 18 sont assurées par l'évent 12.

A la phase haute pression du circuit pulsateur, signifiée par la flèche 23, la membrane 17, libérée du vide exercé sur sa face inférieure, est aspirée par le conduit d'évacuation du lait 10 qu'elle vient obturer, prenant une forme de calotte sphérique signifiée par le traitillé 24. De même, les manchons trayeurs 5, qui ne sont plus retenus par le vide exercé sur leur face extérieure, tendent à collaber. Sous l'effet de l'évent 12, la pression dans la chambre supérieure 15 remonte alors rapidement, ce qui permet aux trayons de se relâcher, par élasticité naturelle de leurs tissus. Enfin,,l'écoulement du lait dans le conduit de sortie 10 ainsi que dans le circuit auquel ledit conduit est raccordé, est garanti par un vide demeuré stable de par l'effet de l'évent supplémentaire 18.

Les avantages obtenus sont nombreux.

L'écoulement du lait dans les conduits d'évacuation se produit sous l'effet d'un vide régulier, ne présentant plus les brutales variations observées sur les faisceaux connus de ce type et signalées en début d'exposé. Il en résulte premièrement que l'on observe, lors de mesures de pression effectuées dans les circuits du lait, plus aucune augmentation de la dépression allant au delà du vide nominal choisi, qui soit susceptible d'être transmise, avec les effets néfastes connus, aux trayons.

De plus, la suppression des turbulences dans l'écoulement du lait ainsi obtenue, entraîne une important diminution du brassage et de l'oxydation du lait, de sorte que la teneur en acides gras libres est tenue à un minimum, garantissant une qualité optimale du lait produit.

D'autre part, la contamination du lait par l'air aspiré n'est, malgré l'introduction d'un second évent, pas augmentée du fait que ledit évent supplémentaire est percé dans l'enceinte même de la chambre supérieure du collecteur. L'air utilisé est donc le même que celui que le premier évent 12 autorise de toute façon à pénétrer dans le circuit du lait, et la consommation de ce deuxième évent est moindre du fait de la dépression qui permane dans la chambre supérieure du collecteur lors de la phase d'obturation d'une part, et du fait que sa consommation est nulle lors de la phase d'ouverture d'autre part.

L'évacuation idéale du lait prévient un engorgement de lait dans le collecteur pour les vaches à fort débit de lait, ce qui permet un temps de traite idéalement raccourci, diminuant par là même le temps d'irritation mécanique des trayons.

Le fonctionnement est absolument indépendant de la valeur du vide nominal choisi, donc également insensible aux déréglements éventuels.

Enfin, le nettoyage du collecteur n'est nullement compliqué du fait de cet évent supplémentaire, celui-ci n'étant pas en contact avec l'extérieur.

Des variantes peuvent être apportées.

- 8 -

Ainsi, l'emplacement de l'évent supplémentaire peut être différent, en fonction de la localisation sur le circuit du lait de l'organe obturateur. Cependant, tel que décrit et disposé, l'évent supplémentaire assure les effets recherchés avec le maximum d'avantages, tant au point de vue des qualités de fonctionnement, que de celui de la contamination et de la détérioration du lait, et que de celui des facilités de nettoyage.

- 1 -

REVENDICATIONS
=================

1. Faisceau de traite mécanique comprenant des gobelets
à enceinte unique ou double destinés à être adaptés aux trayons
de l'animal à traire, et un collecteur relié par des conduits
d'entrée aux gobelets et par un ou plusieurs conduits de sortie
à un circuit d'évacuation soumis à un vide interne par une
pompe à vide, dans lequel des phases périodiques et alternées
de succion et de relâchement des trayons sont obtenues par
les effets combinés d'un dispositif d'obturation partielle ou
totale du circuit du lait commandé par le circuit pulsateur et
d'un ou plusieurs évents situés sur le circuit du lait entre
l'orifice des gobelets destiné à s'adapter aux trayons et
l'organe obturateur, caractérisé en ce que au moins un évent
de section déterminée est disposé sur le circuit du lait entre
le dispositif obturateur et le conteneur auquel mène ledit
circuit, de sote qu'à chaque phase de relâchement du circuit
pulsateur l'écoulement du lait dans le circuit d'évacuation n'est
pas entravé par l'action de l'obturateur.

2. Faisceau de traite selon la revendication 1, caractérisé
en ce que le ou les évents revendiqués sont pratiqués sur le
ou les conduits de sortie du collecteur et dans l'enceinte
même de la chambre dudit collecteur qui comporte les conduits
d'entrée reliés aux trayons, de sorte qu'il n'est pas en
contact avec l'extérieur et que la consommation d'air en est
diminuée.

## Office européen des brevets

# RAPPORT DE RECHERCHE EUROPEENNE

EP 81 81 0376

| | DOCUMENTS CONSIDERES COMME PERTINENTS | | CLASSEMENT DE LA DEMANDE (Int Cl.¹) |
|---|---|---|---|
| Catégorie | Citation du document avec indication, en cas de besoin, des parties pertinentes | Revendication concernée | |
| X | US - A - 3 150 637 (K.E. FOSNES) <br> * Colonne 5, ligne 72 - colonne 6, ligne 61; figures 1,2 * <br><br> -- | 1,2 | A 01 J 5/04 |
| | FR - A - 2 426 405 (ALFA-LAVAL AB) <br> * Page 2, lignes 18-27; page 3, ligne 36 - page 4, ligne 8; figures 1-4 * <br><br> -- | 1,2 | |
| A | FR - A - 2 114 611 (BIZERBA-WERKE WILHELM KRAUT K.G.) <br><br> ---- | | **DOMAINES TECHNIQUES RECHERCHES (Int. Cl.³)** <br><br> A 01 J |

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cite dans la demande
L: document cite pour d'autres raisons

&: membre de la même famille, document correspondant

Le présent rapport de recherche a été établi pour toutes les revendications

| Lieu de la recherche <br> La Haye | Date d'achèvement de la recherche <br> 18-11-1981 | Examinateur <br> NEHRDICH |
|---|---|---|

OEB Form 1503.1   06.78